Europäisches Patentamt

European Patent Office

Office européen des brevets

(19)

(11) Publication number : **0 467 570 A2**

# EUROPEAN PATENT APPLICATION

(12)

(21) Application number : **91306141.2**

(22) Date of filing : **05.07.91**

(51) Int. Cl.⁵ : **C08J 7/04,** C09D 127/12,
C09D 133/12,
// (C09D127/12, 133:12),
(C09D133/12, 127:12)

(30) Priority : **06.07.90 US 548857**

(43) Date of publication of application :
**22.01.92 Bulletin 92/04**

(84) Designated Contracting States :
**CH DE DK ES FR GB IT LI**

(71) Applicant : **MINNESOTA MINING AND
MANUFACTURING COMPANY
3M Center, P.O. Box 33427
St. Paul, Minnesota 55133-3427 (US)**

(72) Inventor : **Hsu, Chih-Chung, c/o Minnesota
Mining and
Man. Co., 2501 Hudson Road, P.O. Box 33427
St. Paul, Minnesota 55133-3427 (US)**
Inventor : **Ree, Buren R., c/o Minnesota Mining
and
Man. Co., 2501 Hudson Road, P.O. Box 33427
St. Paul, Minnesota 55133-3427 (US)**

(74) Representative : **Baillie, Iain Cameron et al
c/o Ladas & Parry, Altheimer Eck 2
W-8000 München 2 (DE)**

(54) Weather resistant flexible substrates.

(57)   A weather resistant flexible substrate, e.g.,
plasticized polyvinyl chloride, coated with a
copolymer of vinylidene fluoride and a
copolymerizable fluoromonomer, e.g., hexaf-
luoropropylene or chlorotrifluoroethylene, and
a predominantly methyl methacrylate resin. The
coated flexible substrates are particularly resis-
tant to dirt and stain accumulation.

EP 0 467 570 A2

## Field of the Invention

This invention relates to a weather resistant substrate and, more particularly, it relates to a weather resistant flexible substrate coated with a blend of a fluorine-containing copolymer and a predominantly methyl methacrylate resin.

## Background of the Invention

One of the problems associated with the use of flexible materials, such as plasticized polyvinyl chloride, in outdoor graphics applications is their tendency to pick up surface dirt which is not easily removed, even by washing, especially after long term exposure of the flexible material to the various weather elements. This is particularly a problem in internally illuminated sign applications as the accumulation of surface dirt leads to a very poor visual appearance even though the flexible materials themselves have not substantially deteriorated from either a physical or chemical point of view.

It is believed that one of the principal reasons such materials are easily susceptible to accumulation of dirt is because the plasticizers which are commonly used in them can migrate to the surface of the substrate, where the tacky nature of the plasticizer helps to readily adhere dirt which accumulates on the surface of the substrate. Because of this, flexible substrates such as vinyl film graphics or flexible vinyl sign faces typically require. application of harsh chemicals and vigorous cleaning to restore them to their original appearance unless they are cleaned on a regular basis, which typically is not practical to do.

Although both acrylic and polycarbonate-based signs are often used because they are relatively dirt and stain resistant, these rather rigid and inflexible materials tend to shatter when subjected to high winds, flying objects, and the like.

What is needed in the industry, therefore, are sign faces which are resistant to dirt, stains, and other types of deterioration caused by the weather elements, yet which do not shatter upon exposure to high winds, flying objects, and the like.

## Brief Summary of the Invention

By the present invention, Applicants have discovered that flexible substrates that are coated with a blend of (a) a copolymer of vinylidene fluoride and a copolymerizable fluorine-containing monomer; and (b) a resin which is predominantly methyl methacrylate, are surprisingly very resistant to dirt, stains, and other weather elements. In a preferred embodiment, the substrate is plasticized vinyl.

The coated flexible substrates of this invention are particularly effective as film graphics or flexible sign faces because dirt does not readily adhere to them and therefore, will be much easier to clean and maintain than previous flexible signs. Furthermore, the coated substrates of this invention remain flexible and will tend not to crack or break upon exposure to various weather elements, as acrylic and polycarbonate based signs tend to.

Other aspects and advantages of the present invention will be apparent from the detailed disclosure, the examples, and the claims.

## Detailed Description of the Invention

In the present invention, a "flexible substrate" is one which can be bent at an angle of 120° without fracturing. Examples of flexible substrates which can be employed in the present invention include, but are not limited to, polyethylene and copolymers thereof, polyurethane, and vinyl-containing materials and copolymers thereof, with the latter vinyl materials being preferred because of their availability, handling, and excellent physical properties. The flexible substrate can be in the form of a film, sheet, or the like.

Typically, the flexible substrate will contain at least about 10 wt%, and preferably at least about 20 wt%, of a plasticizer, based upon the total weight of the substrate. Plasticizers are used in the substrates in order to impart flexibility thereto.

Examples of plasticizers which can be used in the substrates of the present invention include phthalates, phosphates, epoxidized oils, polymeric esters, and aliphatic esters.

The weather resistant coating used in the present invention is a blend of: (1) a copolymer of vinylidene fluoride ("$VF_2$") and a copolymerizable fluoromonomer; and (2) a resin which is predominantly, i.e., greater than 50 wt%, methyl methacrylate.

Generally, from 25-60 wt% $VF_2$/copolymerizable fluoromonomer copolymer and 40-75 wt% of the predominantly methyl methacrylate resin are employed, based upon the total weight of the weather resistant coating. Preferably, about 40-50 wt% copolymer and 50-60 wt% predominantly methyl methacrylate resin are employed.

With regard to the copolymer employed in the weather resistant coating, broadly 40-80 wt%, and preferably 50-70 wt%, vinylidene fluoride and broadly 20-60 wt%, and preferably 30-50 wt%, of the copolymerizable fluoromonomer are employed, based upon the total weight of the copolymer.

Representative examples of copolymerizable fluorine-containing monomers which can be used in the present invention include, but are not limited to, tetrafluoroethylene, chlorotrifluoroethylene, monofluoroethylene, hexafluoropropylene, and a fluoroalkyl vinyl ether such as a lower fluoroalkyl vinyl ether having a $C_1$ to $C_5$ fluoroalkyl group. Hexafluoropropylene and chlorotrifluoroethylene are preferred.

Copolymers of vinylidene fluoride and fluoromonomers, e.g., hexafluoropropylene, are well known and are available commercially. Typically, the copolymerization reaction is carried out by either emulsion, suspension, or solution polymerization. In any of these polymerization methods, the polymerization is usually carried out at a temperature of 0° to 150°C, preferably 5° to 95°C, and at a pressure of 1 to 50 kg/cm².

The polymerization mediums are, for instance, water for the emulsion polymerization; water, a chlorofluorohydrocarbon such as 1,1,2-trichloro-1,2,2-trifluoroethane or 1,2-dichloro-1,1,2,2-tetrafluoroethane, and mixtures thereof for the suspension polymerization; and methyl ethyl ketone, ethyl acetate, butyl acetate and the like for the solution polymerization. In the emulsion polymerization, there are used, for instance, emulsifiers such as $C_7F_{15}COONH_4$, $H(CF_2)_8COONH_4$, $H(CF_2)_6COONH_4$, $C_7F_7COONa$ and $C_7F_{15}COONa$. Known polymerization initiators can be employed in the present invention. For instance, redox initiators consisting of an oxidizing agent such as ammonium persulfate or potassium persulfate, and a reducing agent such as sodium sulfite, and a transition metal salt such as ferrous sulfate employed in the emulsion polymerization. Azo compounds and organic peroxide compounds are employed in the suspension and solution polymerizations, such as azobisisobutyronitrile, isobutyryl peroxide, octanoyl peroxide and isopropyl peroxydicarbonate.

The predominantly methyl methacrylate resin employed in the present invention will contain more than 50 wt% and, preferably, more than 80 wt% of such groups, based upon the total weight of the resin. Other olefinic monomers which can be utilized in the resin include ethyl acrylate, butyl acrylate, octyl acrylate, ethyl methacrylate, butyl methacrylate, octyl methacrylate, acrylamide, methacrylamide, N,N-dimethylacrylamide, N,N-dimethylaminoethyl methacrylate, tetrahydrofurfuryl methacrylate, glycidyl acrylate, glycidyl methacrylate, acrylonitrile, acrylic acid, methacrylic acid, and styrene.

In a preferred embodiment, an ultraviolet light absorber such as a benzophenone, benzotriazole, or diphenyl acrylonitrile derivative is employed in the coating composition in an amount of from about 0.5 to 10 wt% based on the total weight of the weather resistant coating.

Optionally, other known additives may be employed in the weather resistant coating when appropriate. These additives include viscosity controllers, antioxidants, hindered amine light stabilizers, dispersing agents, anti-foaming agents, wetting agents, leveling agents, and the like.

The coating composition used in the present invention can be prepared by adding the above-described fluorine containing copolymer, predominantly methyl methacrylate resin, and other additives to a solvent in a solid concentration of 10 to 40 wt%, and then mixing them by means of a usual mixing machine such as a ball mill, sand mill, three roller mill, kneader, or blade mixer.

Examples of solvents which can be used to prepare the weather resistant coatings are esters such as ethyl acetate, butyl acetate, isobutyl acetate, and glycol esters; ketones such as acetone, methyl ethyl ketone, methyl isobutyl ketone, methyl amyl ketone, and Cyclohexanone; ethers such as tetrahydrofuran, and glycol ethers; amides such as. dimethylformamide and N-dimethylacetamide; alcohols such as methanol, ethanol, and butanol; aromatic hydrocarbons such as toluene and xylene; and the like. The solvents may be employed alone or in admixture with one another.

Alternatively, the coating composition used in this invention may be prepared by mixing water-based dispersions or emulsions of the above fluorine containing copolymer and acrylic resin together with other additives in an appropriate mixer to give a water based dispersion.

The coating may be applied to the substrate by any suitable method as by spray coating; silk-screening; knife coating; roll coating; or gravure coating. After application of the coating to the substrate, the solvent is removed by heating in an oven. Additionally, the coating can be applied to a release liner followed by heat lamination and transfer of the weather resistant coating to the substrate. Another method is to apply the coating to a release liner followed by coating with a vinyl organosol or plastisol which is then fused. Removal of the release liner provides a weatherresistant coated vinyl film.

The present invention is further illustrated by the following non-limiting examples.

Dirt Resistance Tests

The dirt resistance of the coated substrates of the invention were compared to uncoated substrates by both laboratory and outdoor weathering tests.

The laboratory test is described as follows:

Samples were dipped into a fluidized bed of dirt, removed, and the excess dirt was blown off with air. The samples were visually evaluated for the amount of dirt adhering to the surface of the sample. The samples were then weathered in an accelerated weathering device (Q-panel QUV Accelerated Weathering Tester) for one week. The samples were evaluated visually for dirt resistance, ease of cleanability, and color after cleaning. After these evaluations, the samples were washed with -soapy water, rinsed, and dried. The above dirt pickup and accelerated weathering cycle was repeated three more times for a total accelerated weathering exposure time of four weeks.

The outdoor weathering test is described as follows:

Samples were exposed outdoors in a dusty environment facing south at an angle of 45 degrees for a period of four months. The substrates were evaluated visually for cleanliness and color. The samples were then evaluated for ease of cleaning, completeness of cleaning, and color after cleaning by washing with detergent and water, rinsing, and drying.

Example 1

A polymethylmethacrylate resin (Elvacite 2021 from E. I. dupont de Nemours and Company) was dissolved in xylol to make a 25% solution. A copolymer of vinylidene fluoride and chlorotrifluoroethylene (KF-3700 from 3M) was dissolved in methyl isobutyl ketone to form a 10% solution. one part of the acrylic resin solution and 2.5 parts of the fluoropolymer solution were mixed vigorously using a Cowles mixer to give a solution containing equal amounts of acrylic and fluoropolymer resin. 3% each, based on the total resin weight, of a UV absorber (Uvinul N-539 from BASF Corporation) and a hindered amine light stabilizer (Tinuvin 292 from Ciba-Geigy Corporation) were then added to the solution with mixing. The solution was then coated on a plasticized PVC substrate (containing 37 parts of a monomeric dialkyl phthalate plasticizer per hundred parts of vinyl resin) using a knife coater and dried at 150°F for 2 minutes and 280°F for an additional 3 minutes.

Samples of the coated vinyl substrate and an uncoated vinyl substrate were tested for dirt and stain resistance by both the laboratory and outdoor weathering tests. The uncoated substrate was very dirty, hard to clean, and showed some discoloration. The coated substrate had hardly any dirt on it, was easily wiped clean, and showed no discoloration.

Example 2

A polymethylmethacrylate resin (Acryloid A-11 from Rohm and Haas Company) was dissolved in xylol to make a 25% solution. A copolymer of vinylidene fluoride and hexafluoropropylene (FC-2178 from 3M) was dissolved in methyl isobutyl ketone to form a 20% solids solution. 100 parts of the acrylic resin solution were blended with 102 parts of the fluoropolymer resin solution to make a blended solution containing acrylic and fluoropolymer resin in a 55:45 weight ratio. 3% each, based on the total resin weight, of a UV absorber (Uvinul N-539 from BASF Corporation) and a hindered amine light stabilizer (Tinuvin 292 from Ciba-Geigy Corporation) were then added to the solution with mixing. The solution was then coated on a plasticized vinyl substrate (containing 37 parts of a monomeric dialkyl phthalate plasticizer per hundred parts of vinyl resin) using a knife coater and dried at 150°F for 2 minutes and 280°F for an additional 3 minutes.

Samples of this coated vinyl substrate and an uncoated vinyl substrate were tested for dirt and stain resistance by both the laboratory and outdoor weathering tests. The uncoated substrate was very dirty, hard to clean, and showed some discoloration. The coated substrate had hardly any dirt on it, was easily wiped clean, and showed no discoloration.

Example 3

A polymethylmethacrylate resin (Elvacite 2021 from E. I. dupont de Nemours and Company) was dissolved in xylol to make a 25% solution. A copolymer of vinylidene fluoride and chlorotrifluoroethylene (KF-3700 from 3M) was dissolved in methyl isobutyl ketone to form a 10% solution. One part of acrylic resin solution and 2.5 parts of fluoropolymer solution were mixed vigorously using a Cowles mixer to give a solution containing equal amounts of acrylic and fluoropolymer resin. 3% each, based on the total resin weight, of a UV absorber (Tinuvin 1130 from Ciba-Geigy Corporation) and a hindered amine light stabilizer (Tinuvin 292 from Ciba-Geigy Corporation) were then added to the solution with mixing. The solution was coated on a release liner using a knife coater and dried at 150°F for 2 minutes and 280°F for an additional 3 minutes. A PVC plastisol containing 37 parts of a monomeric phthalate plasticizer per hundred parts of vinyl resin was then coated on this coated liner and fused at 350°F for 5 minutes. When the fused PVC film was stripped off the release liner, the fluoropolymer-acrylic coating was adhered to its surface.

When this coated vinyl substrate and an uncoated vinyl substrate are tested for dirt resistance using the outdoor weathering test, the coated substrate is much cleaner than the uncoated substrate and the small amount of dirt present wipes off more easily from the coated substrate.

Example 4

A polymethylmethacrylate resin (Elvacite 2009 from E. I. duPont de Nemours and Company) was dissolved in xylol to make a 25% solution. A copolymer of vinylidene fluoride and chlorotrifluoroethylene (KF-3700 from 3M) was dissolved in methyl isobutyl ketone to form a 10% solution. One part of the acrylic resin solution and 2.5 parts of the fluoropolymer solution were mixed vigorously using a Cowles mixer to give a solution containing equal amounts of acrylic and fluoropolymer resin. 3% each, based on the total resin weight, of a UV absorber (Tinuvin 1130 from Ciba-Geigy Corporation) and a hindered amine light stabilizer (Tinuvin 292 from Ciba-Geigy Corporation) were then added to the solution with mixing. This solution was coated on a release liner using a knife coater and dried at 150°F for 30 minutes. A colored vinyl ink was then screen printed over the coated liner and dried at 150°F for 30 minutes. The inkcoating-liner laminate was then placed in contact with a plasticized vinyl substrate with the ink layer contacting the vinyl surface. The ink and fluoropolymeracrylic coatings were then heat transferred to the vinyl substrate in a vacuum applicator using a heating cycle of 225°F for 5 minutes to give a colored laminate with a weather resistant protective coating surface.

When this coated laminate and an uncoated vinyl substrate are tested for dirt resistance using the outdoor weathering test, the coated substrate is much cleaner then the uncoated substrate and the coated substrate is much more easily cleaned than the uncoated substrate.

Example 5

This example is identical to Example 4 except that the step of coating the colored vinyl ink on the coated liner was omitted. The fluoropolymer-acrylic coating was transferred to the plasticized vinyl substrate using the vacuum application as in Example 4 to give a vinyl substrate with a protective weather resistant coating.

When this coated substrate and an uncoated vinyl substrate are tested for dirt resistance using the outdoor weathering test, the coated substrate is much cleaner than the uncoated substrate and the coated substrate is much more easily cleaned than the uncoated substrate.

Example 6

A polymethylmethacrylate resin (Elvacite 2021 from E. I. duPont de Nemours and Company) was dissolved in xylol to make a 25% solution. A copolymer of vinylidene fluoride and chlorotrifluoroethylene (KF-3700 from 3M) was dissolved in methyl isobutyl ketone to form a 10% solution. One part of the acrylic resin solution and 2.5 parts of the fluoropolymer solution were mixed vigorously using a Cowles mixer to give a solution containing equal amounts of acrylic and fluoropolymer resin. 3 each, based on the total resin weight, of a UV absorber (Tinuvin 1130 from Ciba-Geigy Corporation) and a hindered amine light stabilizer (Tinuvin 292 from Ciba-Geigy Corporation) were then added to the solution with mixing. The solution was coated on a release liner using a knife coater and dried at 150°F for 30 minutes. A vinyl organosol containing 35 parts of a polymeric plasticizer per hundred parts of vinyl resin was then knife coated on the coated liner and dried at 150°F for one minute and fused at 300°F for 30 seconds and 400°F for 45 seconds to give a vinyl film-coating-liner laminate. This laminate is then coated with a pressure sensitive adhesive and the liner is removed to give a vinyl substrate with a protective dirt resistant coating on one side and a pressure sensitive adhesive on the other side which is useful as a weather resistant marking film for outdoor decorative vinyl graphics.

When this marking film and an uncoated vinyl marking film are adhered to a painted aluminum panel and tested for dirt resistance using the outdoor weathering test, the coated vinyl marking film is cleaner than an uncoated vinyl marking film.

Example 7

Samples of the weather resistant marking film of Example 6 are adhered to the coated substrate of Example 3 and to uncoated substrate containing monomeric plasticizer. When these samples are tested for dirt resistance in the outdoor weathering test, the samples on the coated substrate are clean in both the marked and unmarked areas. The samples on the uncoated substrate are clean in the marked areas but show considerable dirt accumulation in the parts of the substrate which are not covered by the marking film.

When samples of the marking film of Example 6 are adhered to the coated substrate of Example 3 and to uncoated substrate and are then oven aged at 150°F for two weeks, the 180° peel adhesion for the sample on the coated substrate is 2.7 pounds per inch width and the adhesion on the uncoated substrate is only 0.65 pounds per inch width. This shows that the coated substrate prevents the weakening of the adhesive bond with aging.

Reasonable modifications and variations are possible from the foregoing disclosure without departing from either the spirit or scope of the present invention as defined in the claims.

Claims

1. A weather resistant article comprising a flexible substrate coated with a composition consisting essentially of a blend of: (a) 25-60 wt% of a copolymer consisting essentially of 40-80 wt% vinylidene fluoride and 20-60 wt% of at least one copolymerizable fluoromonomer; and (b) 40-75 wt% of a predominantly methyl methacrylate resin.

2. A weather resistant article according to Claim 1 wherein said flexible substrate is selected from the group consisting of polyethylene, polyethylene copolymers, polyurethanes, polyvinyls, and polyvinyl copolymers.

3. A weather resistant article according to Claim 1 comprising a flexible plasticized vinyl substrate coated with a composition consisting essentially of a blend of: (a) 40-50 wt% of a copolymer consisting essentially of 40-80 wt% vinylidene fluoride and 20-60 wt% copolymerizable fluoromonomer; and (b) 50-60 wt% of a predominantly methyl methacrylate resin.

4. A weather resistant article according to Claim 3 wherein said composition consists essentially of a blend of: (a) 40-50 wt% of a copolymer consisting essentially of 50-70 wt% vinylidene fluoride and 30-50 wt% copolymerizable fluoromonomer; and (b) 50-60 wt% of a predominantly methyl methacrylate resin.

5. A weather resistant article according to Claim 4 wherein said resin contains at least 80 wt% methyl methacrylate.

6. A weather resistant article according to Claim 1 wherein said copolymerizable fluoromonomer is selected from the group consisting of tetrafluoroethylene, chlorotrifluoroethylene, monofluoroethylene, hexafluoropropylene, and fluoroalkyl vinyl ethers.

7. A weather resistant article according to Claim 6 wherein said copolymerizable fluoromonomer is hexafluoropropylene or chlorotrifluoroethylene.

8. A weather resistant article according to Claim 1 wherein said predominantly methyl methacrylate resin further comprises at least one monomer selected from the group consisting of ethyl acrylate, butyl acrylate, octyl acrylate, ethyl methacrylate, butyl methacrylate, octyl methacrylate, acrylamide, methacrylamide, N,N-dimethylacrylamide, N,N-dimethylaminoethyl methacrylate, tetrahydrofurfuryl methacrylate, glycidyl acrylate, glycidyl methacrylate, acrylonitrile acrylic acid, methacrylic acid, and styrene.

9. A weather resistant substrate according to Claim 1 further containing about 0.5 to 10 wt% of an ultraviolet light absorber in said composition.

10. A weather resistant substrate according to Claim 1 wherein said substrate comprises at least 20 wt% of a plasticizer.

11. A weather resistant article according to Claim 1 wherein said flexible substrate is coated on one surface with said blend of vinylidene fluoride copolymer and predominantly methyl methacrylate resin and is coated on the opposite surface with a pressure sensitive adhesive.

12. An article comprising a release liner having at least one major surface coated with a composition consisting essentially of a blend of: (a) 25-60 wt% of a copolymer consisting essentially of 40-80 wt% vinylidene fluoride and 20-60 wt% of at least one copolymerizable fluoromonomer; and (b) 40-75 wt% of a predominantly methyl methacrylate resin.

13. An article according to claim 12 further having a colored ink on at least a portion of the surface of said composition.

14. A composite article comprising
a) a first weather resistant article comprising a flexible substrate coated with a composition consisting essentially of a blend of: (a)25-60 wt% of a copolymer consisting essentially of 40-80 wt% vinylidene fluoride and 20-60 wt% of at least one copolymerizable fluoromonomer; and (b) 40-75 wt% of a predominantly methyl methacrylate resin, and
b) a second article comprising a flexible substrate adhered with a pressure-sensitive adhesive to at least a portion of the surface of said composition of said first article.

15. A composite article according to claim 14 wherein said second article is a flexible, weather-resistant article comprising a flexible substrate coated with a composition consisting essentially of a blend of: (a) 25-60 wt% of a copolymer consisting essentially of 4080 wt% vinylidene fluoride and 20-60 wt% of at least one copolymerizable fluoromonomer; and (b) 40-75 wt% of a predominantly methyl methacrylate resin.